# EUROPEAN PATENT SPECIFICATION

(11) **EP 2 317 692 B1**
(45) Date of publication and mention of the grant of the patent: **20.05.2015**
(21) Application number: 10181571.0
(22) Date of filing: 29.09.2010
(51) Int. Cl.: G06Q 10/10, H04M 3/42, H04L 12/18

(54) **Virtual meeting attendee**
Virtueller Versammlungsteilnehmer
Participant à des réunions virtuel

(30) Priority: 03.11.2009 US 611655
(43) Date of publication of application: 04.05.2011
(73) Proprietor: Avaya Inc., New Jersey, DE 07920-2332 (US)
(72) Inventor: Sambhar, Ankur, Bavdhan Pune 411021 (IN)
(74) Representative: Williams, David John

(56) References cited:
- EP-A1- 1 414 227
- KR-A- 20000 043 341
- US-A1- 2003 023 691
- US-A1- 2005 050 061
- US-A1- 2008 168 168
- US-B1- 7 590 230

## Description

### FIELD OF THE INVENTION

One exemplary aspect of the present invention is directed toward enhanced communications. Even more particularly, one exemplary aspect is directed toward a virtual meeting attendee.

### BACKGROUND

Meetings, and virtual meetings, such as webinars, conference calls and the like, are assemblies of one or more persons for one or more of a business or social purpose. Webinars, and web conferencing, are used to conduct live meetings, training, or presentations via a distributed network, such as the Internet. In a web conference, each participant can sit at their own computer and be connected to other participants via the Internet. A web conference can include one or more of audio and video information, as well as supplemental methods to exchange information, such as white boarding, shared worked spaces, and the like. Some exemplary features of web conferences includes slideshow presentations, live or streaming video, VOIP, web tours, meeting recording capabilities, white boarding, text chat, polls and surveys, screen sharing, desktop sharing, and application sharing. In many instances, web servicing is provided, for a charge, from a service provider and hosted on a vendor's server.

US 2008/0168168 discloses a technique for communication management. A user of a communication session can set up the system to monitor for keywords in a communication session. Upon detection of a keyword, the user can be alerted that the keyword was detected in the communication session. US 2005/005 0061 A1 describes a method for notifying subscribers when they are allowed to join a meeting at a particular entry point.

### SUMMARY

In accordance with the invention there is provided a method for enhancing a conference according to claim 1. Further in accordance with the invention there is provided a system for enhancing a conference according to claim 10.

While virtual meetings, such as webinars have significantly improved the convenience of attending a meeting, they do have drawbacks. For example, if a user is unable to attend a meeting, a user may still need to share or contribute to the meeting via a more traditional means such as by telephone, via e-mail, or in a face-to-face meeting. Another drawback could be present if the user does not have the ability to be patched into the conference on-demand. For example, for the occasions when the user will not be able to attend a conference due to non-availability of a cellular network and/or the absence of fixed-line, participation in an online meeting may not be possible. Similar problems may exist if the user is unable to secure sufficient bandwidth for an Internet connection to the meeting.

In accordance with one arrangement, a Virtual Meeting Attendee (VMA) allows a user to share inputs with a meeting congregation without necessarily needing to participate directly. For example, a conference system can be equipped with technology that allows a perspective meeting attendee to appoint a virtual meeting attendee in the instance where the user is not able to attend the conference. This virtual meeting attendee can participate in the conference on behalf of the user. Some of the exemplary functions associated with the VMA are the ability to record one or more portions of the conference, take notes, react to action items for the user, make pre-recorded suggestions, and if required, patch in the user to allow the user to contribute in real-time to the conference.

The VMA can be organized and managed such that one or more of the VMA's can speak in turn, can allow on-demand patching to the user, can recognize certain key words or phrases that are used as a trigger for a supplemental activity or action, and the like. For example, the mentioning of a user's name in the conference can be used as the basis for a trigger, the trigger causing one or more of an automatic response from the VMA, causing the VMA to contact the user, or the like.

In accordance with another arrangement, a user schedules a meeting. Next, a meeting is stored with a corresponding agenda and conference ID. The one or more participants receive an invite to the meeting, such as via e-mail. Each participant then has the ability to decide whether or not a VMA may need to be assigned to the meeting on their (or their team's). If a VMA does need to be assigned to the meeting, the participant enters specific information about the VMA with the conference information and agenda details.

When the conference starts, the conference system can retrieve an agenda from a data store. As the participants and the various VMAs join the conference, the system can play the agenda details with the various participants and VMA participating in the discussion. As discussed, the VMA can record action items for the user, patch the user into the conference, if needed, and the like.

As discussed, if the user will not be able to attend the meeting, the user can appoint a VMA which will participate in a conference on behalf of the user. As per the user configuration, the VMA should be able to record the complete conference, take notes, take action items for the user, make pre-recorded suggestions, if required, patch the user into the conference, and the like. Some of the more common responsibilities of the VMA therefore include note taking ability, conference recording capability, making pre-recorded suggestions, on-demand patching, and taking dynamic actions on behalf of the user.

The VMA can also contact the user in the event some input from the user is required. This feature can be configurable as per the choice and preferences of the user. For example, the VMA can be equipped with contact information for the user, as well as be provided with a capability of determining presence information associated with the user to assist with a most optimum method for contacting the user should their input be required. The user can specify the mode of contact as well as identify the type of information they would like to receive. For example, the VMA could place a call to the user, and play the question that was asked during the conference to the user or, for example, perform a text-to-speech conversion and send a text message, for example via email, SMS or IM, to the user. The user's response could then be played to the other conference attendees. This procedure would allow users to join the conference only when the user's inputs are required. An exemplary embodiment of the VMA would also allow the VMA to perform as moderator of the meeting and could start the conference in the case of the host being late. For example, the VMA can read or otherwise display or present the agenda for the meeting at the start of the conference and continue in a manner as defined by the user.

In accordance with another arrangement, the user can pre-record inputs for a tagged agenda to allow participation in topics that the user wants to share with the other participants during the conference. During the conference, as the given agenda topic would start, the VMA can be activated and can play the user's inputs while at the same time cooperating with the other VMAs (if present) such that all VMAs are able to provide their input to the tagged agenda item(s).

Some exemplary benefits associated with arrangements are the provided flexibility available to the user through the use of the VMA in the conference when the user is unable to attend the same. Additionally, when the user is not able to attend the conference, no off-line discussion (for example via e-mail) would be required to share information with the other conference participants. Additionally, the VMAs could provide flexibility to the user to be patched in, in real-time, to the conference if required. As discussed, VMAs can also act as a moderator of the meeting and can have an integrated learning system, such as an expert system, to assist with analysis of the user's inputs and/or responses and could enhance the VMA's system for future responses on behalf of the user. Another exemplary advantage is that the user is able to record inputs in their voice, with it appearing to the other conference participants that the user is actually on the call, even though they would be not personally participating. These pre-recorded inputs could optionally include some type of identifier that the message was prerecorded and is being played or shown with the cooperation of a VMA.

In greater detail, an exemplary use of the VMA is as follows:
Use Case
1. Host Alice schedules a meeting to:
a. Review of Internet Technologies team
b. Review of R&D team
c. Product line Roadmap
d. Discussion on revenue targets

2. While scheduling meeting, Alice will tag the agenda with time restrictions

| | | | | |
|---|---|---|---|---|
| | Attendees: | Bob (Internet Technology Team), | | |
| | | Charlie (R&D Team), | | |
| | | Dan (Product Management) and | | |
| | | Ely (Finance) | | |
| | When: Friday 16th June 2009 | | | |
| | Time: 10:00 ― 12:00 AM | | | |
| | Agenda Details: | | | Accept All/Decline All/VMA |
| a. Review of Internet Technologies team | | | 10:00-10:30 | Accept/Decline/VMA |
| b. Review of R&D team | | | 10:30-11:00 | Accept/Decline/VMA |
| c. Product line Roadmap | | | 11:00-11:30 | Accept/Decline/VMA |
| d. Discussion on revenue targets | | | 11:30-12:00 | Accept/Decline/VMA |

3. System will store the meeting agenda with conference ID in the centralized Database.
4. Alice sends the meeting invite to all the participants, i.e.

| | |
|---|---|
| Bob: | Represent Internet Technologies team |
| Charlie: | Represent R&D team |
| Dan: | Product Management |

5. Charlie will be unable to attend the meeting but would like to share some details about the progress/status on R&D team.
6. Charlie will accept the invite with VMA i.e. he will assign a Virtual Meeting Attendee (VMA) on behalf of himself to attend the meeting.
7. It will open a webpage to configure the VMA for the given meeting.
8. Webpage will contain all the details about the meeting i.e. reference number, subject, date, time and tagged agenda.
9. Charlie would configure the VMA with the required details i.e.
9.1 Do VMA need to participate in the complete meeting or just for a specified topic.
9.2 Do VMA need to record the complete meeting?
9.3 Should VMA take Action Items for the user from the meeting?
9.4 How to patch user to the conference if required
   9.4.1 Through IM (VMA will type text to user over IM)
   9.4.2 Through phone (VMA will call Charlie and will patch to the conference)
9.5 This will generate VMA ID which will map the conference ID and the topic ID, for the Charlie.

10. Charlie will pick-up the phone and will enter the VMA ID
10.1 System will prompt Charlie to record the information for the tagged agenda topic corresponding to VMA ID.
10.2 Charlie will record the details that it would like to share with the other participants.

11. On the day of conference, Alice would login to conference as host.
12. Conference system will read the database and would retrieve the details about the conference i.e. meeting agenda, VMA details , etc
13. System will read out the tagged agenda.
14. At 10:30, at the start of the agenda topic #b i.e. Review of R&D team, Charlie's VMA will be activated. System will read out the agenda topic followed by the VMA inputs pre-recorded by Charlie.
15. As per the Charlie's inputs, the meeting discussion will proceed on agenda topic #2.
16. Charlie's VMA will keep recoding the meeting for the given agenda topic.
17. If Alice would like to ask a question to the Charlie, Alice would just need to speak-up the question on the conference with Charlie's name.
18. Charlie's VMA would convert the Alice's question either to text and would send it across to Charlie over the IM.
19. Else Charlie's VMA will patch the Charlie on the conference.
20. At the end of the conference, system will store all the information back into DB.
21. Later Charlie would go and retrieve the information collected by the VMA.

Accordingly, exemplary embodiment of this invention is directed toward enhanced conferencing services. More specifically, exemplary embodiment is directed toward the use of a virtual meeting attendee (VMA) in a conference environment.

Additional aspects of the invention relate to use of a VMA on behalf of a user.

Even further aspects of the invention are related toward a VMA providing information, via text, speech, multimedia, or the like, to one or more other conference participants.

Additional aspects of the invention relate to monitoring an agenda and triggering participation of a VMA when certain agenda items have been reached.

Still further aspects of the invention relate to allowing a VMA to act as a moderator to one or more of start and conduct a conference.

Even further aspects of the invention relate to allowing a user to configure VMA properties for conference participation.

Even further aspects of the invention are directed toward management of various VMAs in a conference environment.

Additional aspects are also directed toward on-demand patching to a user initiated by a VMA.

Even further aspects are directed toward managing user preferences and presence information to determine an appropriate contact modality for the user, if needed.

The present invention can provide a number of advantages depending on the particular configuration. These and other advantages will be apparent from the disclosure of the invention(s) contained herein.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic even if performance of the process or operation uses human input, whether material or immaterial, received before performance of the process or operation. Human input is deemed to be material if such input influences how the process or operation will be performed. Human input that consents to the performance of the process or operation is not deemed to be "material."

The term "computer-readable medium" as used herein refers to any tangible storage and/or transmission medium that participate in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment to e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like.

While circuit or packet-switched types of communications can be used with the present invention, the concepts and techniques disclosed herein are applicable to other protocols.

Accordingly, the invention is considered to include a tangible storage medium or distribution medium and prior art-recognized equivalents and successor media, in which the software implementations of the present invention are stored.

The terms "determine," "calculate" and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element. Also, while the invention is described in terms of exemplary embodiments, it should be appreciated that individual aspects of the invention can be separately claimed.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below.

### BRIEF DESCRIPTION OF THE DRAWINGS

The exemplary embodiments of the invention will be described in detail, with reference to the following figures, wherein:
Fig. 1 illustrates an exemplary conference system according to this invention;
Fig. 2 is a flowchart outlining an exemplary method for agenda creation according to this invention;
Fig. 3 is a flowchart outlining an exemplary method for meeting management according to this invention;
Fig. 4 is a flowchart outlining an exemplary method VMA monitoring according to this invention;
Fig. 5 is a flowchart outlining an exemplary method for meeting playback according to this invention; and
Fig. 6 is a flowchart outlining an exemplary method for VMA assignment according to this invention.

### DETAILED DESCRIPTION

The invention will be described below in relation to a conference environment. Although well suited for use with conferencing and meeting devices, the invention is not limited to use with any particular type of device or configuration of system elements and those skilled in the art will recognize that the disclosed techniques may be used in any environment in which it is desirable to provide virtual meeting attendant assistance. The various devices described herein can be any device such as a telephone, speakerphone, cellular phone, SIP-enabled endpoint, softphone, PDA, conference system, video conference system, wired or wireless communication device, PC, desktop computer, laptop, netbook, or in general any device that is capable of supporting a change based on a contextual change.

The exemplary systems and methods of this invention will also be described in relation to software, modules, and associated hardware and network(s). In order to avoid unnecessarily obscuring the present invention, the following description omits well-known structures, components and devices that may be shown in block diagram form, are well known, or are otherwise summarized.

For purposes of explanation, numerous details are set forth in order to provide a thorough understanding of the present invention. It should be appreciated however, that the present invention may be practiced in a variety of ways beyond the specific details set forth herein.

A number of variations and modifications of the invention can be used. It would be possible to provide or claims for some features of the invention without providing or claiming others.

The exemplary systems and methods of this invention have been described in relation to enhancing conferencing capabilities provided by a VMA. However, to avoid unnecessarily obscuring the present invention, the description omits a number of known structures and devices. This omission is not to be construed as a limitation of the scope of the claimed invention. Specific details are set forth to provide an understanding of the present invention. It should however be appreciated that the present invention may be practiced in a variety of ways beyond the specific detail set forth herein.

Furthermore, while the exemplary embodiments illustrated herein show various components of the system collocated; certain components of the system can be located remotely, at distant portions of a distributed network, such as a LAN, cable network, and/or the Internet, or within a dedicated system. Thus, it should be appreciated, that the components of the system can be combined in to one or more devices, such as a gateway, or collocated on a particular node of a distributed network, such as an analog and/or digital communications network, a packet-switch network, a circuit-switched network or a cable network.

Also, the terms virtual meeting attendee, virtual meeting attendant, virtual conference attendee, virtual conference attendant, virtual meeting assistant, virtual meeting agent, as well as meeting and conference may be used interchangeably.

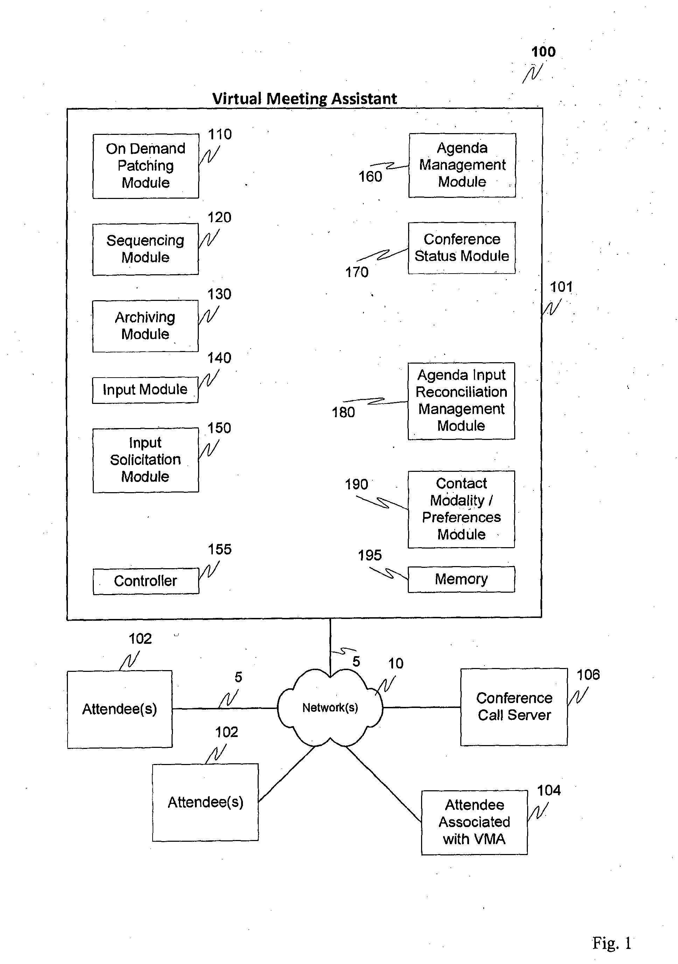

Fig. 1 illustrates an exemplary conference system 100. In addition to all known componentry, includes the virtual meeting assistant or attendee 101, one or more attendees 102, a conference call server 106, and an attendee associated with a VMA 104, all interconnected by one or more networks 10 and links 5.

The VMA 101 includes an on demand patching module 110, a sequencing module 120, an archiving module 130, an input module 140, an input solicitation module 150, controller 155, agenda management module 160, conference status module 170, agenda input reconciliation management module 180, contact modality module 190 and memory 195.

In operation, one or more attendees 102 would like to join a conference hosted by the conference call server 106. While exemplary embodiments will be discussed in relation to a conference call, it should be appreciated that the conference can include any type of information, including multimedia information, video information, audio information, text information, and the like. Therefore, it should be appreciated the invention is not limited to a conference call.

If one of the attendees 102 determines that they either are not available or do not wish to participate in a conference, an attendee can opt to be associated with a VMA. An example of an attendee associated with a VMA is attendee 104.

In more detail, one or more of the attendees 102 determine they would like to schedule a meeting. In conjunction with sending out one or more invites for the meeting, the attendee can also determine agenda topics in conjunction with the agenda management module 160. These agenda topics can be forwarded with the invite, and can optionally include restrictions as to whether all attendees have full visibility into the agenda items. For example, for a conference where the plurality of agenda items, certain attendees may only be invited to the conference for certain agenda items, while conference attendees may be invited for the entire agenda. Associated with each agenda item can be a time the specified agenda item is expected to be discussed as well as the necessary data structures to allow tagging of the agenda item and association with one or more Virtual Meeting Assistants.

A conference ID can also be assigned to the agenda with the option given for each invitee to not only accept the conference invitation but to also individually select for each agenda item whether they expect to participate in that agenda item, not participate in that agenda item, or whether their VMA will be participating for that agenda item.

Once the invitation is sent out, the VMA 101, in cooperation with the conference status module 170 monitors the status of the invitation(s). Should an attendee decide to utilize the virtual meeting assistant for participation in or more agenda items, in cooperation with one or more input solicitation module 150, controller 155, memory 195, and agenda management module 160, and interface, such as a GUI, TUI, web interface, or the like, can be presented to the conference attendee with the conference details. The attendee is then able to configure their VMA such as indicating their participation details, recording details, action items details, patch details, and the like.

More specifically, an attendee can assign a VMA to a particular topic or tagged agenda item. For each selected topic or tagged agenda item, the attendee can one or more of record and store inputs for the tagged agenda topics. As discussed, these inputs can include one or more of voice input, audio input, multimedia input, text input, graphical input, or the like. These inputs are then stored with the cooperation of the agenda management module 160 for playback during the tagged agenda item.

In addition to being able to include content for presentation during a tagged agenda item, a user, via the input module 140 can also assign preferences governing the operation of the VMA. For example, as discussed in greater detail hereinafter, the attendee can configure the VMA to perform one or more actions during the conference such as record one or more portions of the conference, establish preferences for how the VMA should contact the attendee, should a contact be necessary, the contact modality, and in general any preference regarding either operation of the VMA or interaction of the VMA with the attendee. These preferences can be stored in the contact modality / preference module 190.

As in inputs are received from the one or more attendees via their VMA, the agenda input reconciliation management module 180 stores and organizes the inputs for presentation during the conference. All of this information is saved on an ongoing basis pending the start up of the conference.

At the initiation of a conference, details regarding the conference are retrieved, and in cooperation with the agenda management module 160, conference status module 170, agenda input reconciliation management module 180, and sequencing module 120, a conference is commenced by stepping through the agenda.

The agenda management module 160, optionally cooperating with the moderator and/or one or more attendees who are responsible for a particular agenda item, keeps tract of which agenda items have been addressed and which remain. In additional, the agenda management module 160 determines whether an agenda item is a tagged agenda item that is associated with VMA input from an attendee.

If a tagged agenda item does have an identifier indicating there is input from a VMA, the sequencing module 120, cooperating with the agenda input reconciliation management module 180 determines an appropriate order for each VMA to make its presentation regarding the particular tagged agenda item. For example, information such as attendee title, attendee preference information, moderator preferences, or in general, any identifier can be used to assist the agenda input reconciliation management module 180 with determining which VMA item should be presented first, which VMA should be presented second, and so on. In addition, the VMA inputs can be ranked based on a VMA priority and/or dependency on other VMAs. For example, if a team of attendees are having their VMAs make certain inputs for a tagged agenda item, certain VMA contributions may be dependent on other VMA contributions. In this type of situation, a VMA input can optionally include one or more indicators that assign the dynamic priority to the VMA input based on other VMA inputs. For example, the agenda input reconciliation management module 180 can indentify the various VMA inputs and then, coordinating with the agenda management module 160 and the sequencing module 120 reconcile any conflicts to ensure proper presentation order.

In addition to being able to provide information to a conference, VMAs can also act on behalf of a conference attendee. For example, the VMA can monitor the status of a conference for any of a number of defined triggering events. Once one of these triggering events is detected, the VMA 101 determines what action, if any, should be taken. For example, one option is for the VMA to record one or more portions of the conference. The VMA 101, cooperating with the archiving module 130, then commences recording based on the detected triggering event. The end of recording can be based on, for example, the detection of another triggering event, based on a preference specified by the attendee, or the like.

Another exemplary triggering event could cause the VMA 101 to contact the associated conference attendee (or another designated endpoint or person(s)). In this case, and in cooperation with the contact modality module 190, the attendee can be contacted. This contact can optionally further be based on presence information, as well as a preferred contact modality in which the VMA 101 may perform translation services to appropriately convert the contact into a modality appropriate for the attendee. For example, another conference attendee could send a message to the attendee during the conference. The VMA could detect the receipt of this message, and knowing that the attendee was on a mobile phone, convert the message from text-to-speech and forward it to the attendee at their phone.

In accordance with another exemplary embodiment, the triggering event could cause the necessity of a real-time patch being made to the attendee. For example, and in cooperation with the on demand patching module 110, the VMA, optionally based on presence information, can immediately contact the associated attendee for participation in the conference. The VMA could also be equipped with functionality to allow the attendee to be patched in via text, via a messaging service, via a multimedia service, or the like.

The VMA 101 can also be used by an attendee to replay one or more portions of stored conference that may be archived. For example, and in cooperation with the archiving module 130 an attendee associated with a VMA 104 can request one or more portions of a conference be replayed. Replaying can optionally include inputs from one or more other VMAs, and/or from one or more other participants.

Optionally further, the playback from the archiving module 130 can include all of the meta-information associated with the conference, such as which agenda items were tagged, ranking of VMAs, and in general, any other information pertinent to the conducted conference.

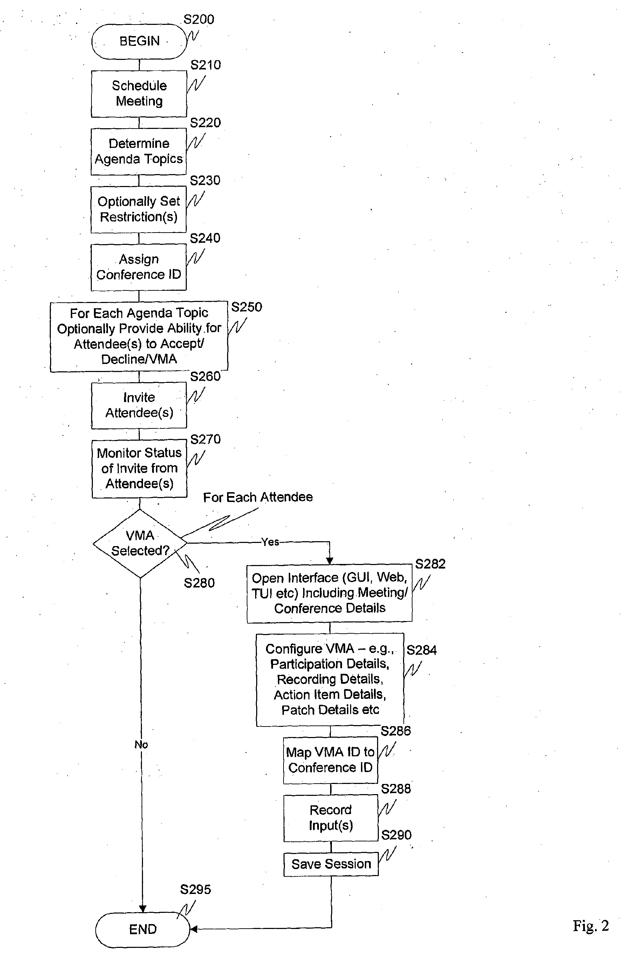

Fig. 2 outlines an exemplary method for conference or meeting creation, for example, by a participant who would like to assign a VMA. In particular, control begins with step S200 and continues to step S210. In step 5210, a meeting is scheduled. Next, in step S220, one or more agenda topics are determined. Then, in step S230, restrictions can optionally be associated with the meeting that restrict, for example, who has access to certain agenda topics, who may receive the meeting invite, or the like. Control then continues to step S240.

In step S240, a conference ID is assigned to the meeting. Next, in step S250, and for each agenda topic, each attendee can optionally be provided the ability to accept, decline, to participate, or indicate that their associated VMA will be presenting information during that agenda topic. Then, in step S260, the meeting invite is distributed to one or more attendees. Control then continues to step S270.

In step S270, the status of the invite from the various attendees is monitored. Next, in step S280, a determination is made, for each attendee, whether VMA participation has been elected. If VMA participation has been elected, control jumps to step S282. Otherwise, control continues to step S295 where the control sequence ends.

In step S282, an interface, such as a GUI, TUI, web interface, or the like, is opened and includes the meeting and/or conference details. Next, in step S284, the VMA is configured including one or more of participation details, recording details, action item details, patch details, and the like. Then, in step S286, the VMA ID is mapped to a conference ID to ensure a correct correlation between the information the VMA is to present, and the meeting, and further to a tagged agenda item(s). Control then continues to step S288.

In step S288, one or more inputs are recorded for presentation during the selected agenda item. The session is then saved in step S290 with control continuing to step S295 where the control sequence ends.

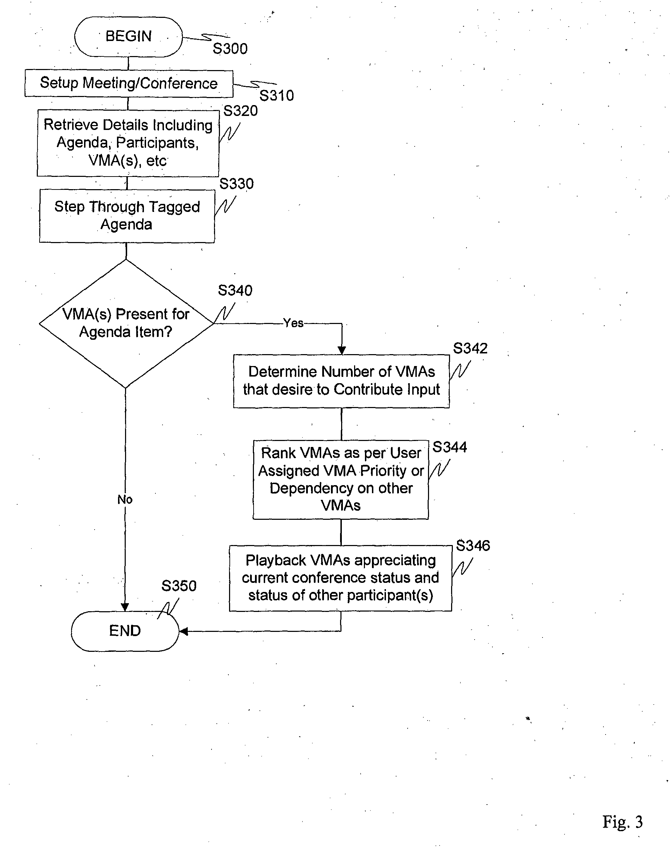

Fig. 3 illustrates an exemplary method for conducting a conference or meeting according to this invention. In particular, control begins in step S300 and continues to step S310. In step S310, the meeting is setup with control continuing to step S320. In step S320, details including one or more of an agenda, tagged agenda items, participants, VMAs, and the like are retrieved. Optionally, it can be confirmed whether or not all VMAs that were scheduled to be present based on step S250 have logged into or are otherwise present at the meeting. Then, in step S330, the agenda is stepped through including the stepping through of any tagged agenda items. Control then continues to step S340.

In step S340, a determination is made whether one or more VMAs are present for a particular agenda item, and whether they have information to present. If the VMAs are either not present, or they do not have information to present, control jumps to step S350 where the control sequence ends.

Otherwise, control jumps to step S342 where the number of VMAs that desire to contribute input are determined. Next, in step S344, and based on a ranking, the VMAs are assigned a priority or other dependency to other VMAs, assuming more than one VMAs are desiring to contribute input. Then, in step S346, the VMA inputs are played back appreciating the current conference status and status of the participants. For example the VMAs can detect whether another attendee is speaking or some other activity is being conducted during the conference, and wait for a pause or other indicator (such as a signal from the moderator) before providing their input. Control then continues to step S350 where the control sequence ends.

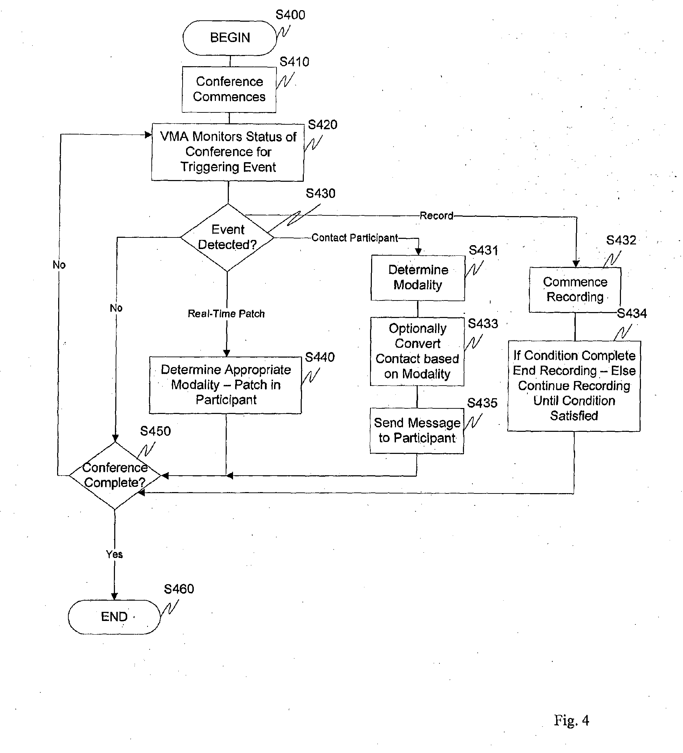

Fig. 4 outlines an exemplary method for one or more VMAs to detect the status of a triggering event, and take a subsequent action. In particular control begins in step S400 and continues to step S410. In step S410 a conference commences. Next, in step S420, the VMA monitors the status of the conference or a triggering event. This triggering event can be, for example, a certain word or phrase, the identification of a name such as the name of the attendee associated with the VMA, moderator identifying the attendee, or the like. Next, in step S430, a determination is made whether one of these triggering events has occurred.

One option for a detected triggering event causes the VMA to record one or more portions of the conference. If this is the case, control jumps to step S432 where the VMA commences recording. This recording can be audio, video, multimedia, or in general in relation to any information associated with the conference. Control then continues to step S434 where, if a condition is present, recording ends with recording otherwise continuing until the condition is satisfied. Control then jumps to step S450.

If the triggering event results in the need to contact the attendee or any participant, control jumps to step S431. In step S431, the VMA determines the appropriate modality to contact the media attendee. Next, in step S433, the VMA optionally converts the contact to the attendee based one or more preference information, presence information, and the like. Then, in step S435, a message is sent to the attendee. Control then jumps to step S450 where the control sequence ends.

If the triggering event necessitates a real-time patch to the attendee, control jumps to step S440. In step S440, and optionally based on one or more preferences, presence information, and the like, a communication is initiated to the attendee to patch them in to the conference. Control then continues to step S450 where the control sequence ends.

In step S450, a determination is made as to whether the conference is complete. If the conference is complete, control continues to step S460. Otherwise, control jumps back to step S420.

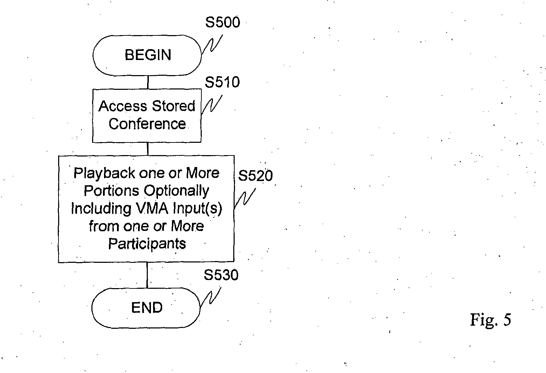

Fig. 5 illustrates an exemplary method for replaying a conference according to this invention. In particular, control begins in step S500 and continues to step S510. In step S510, a stored conference is accessed. Next, in step S520, the conference is played back and this playback optionally includes input from one or more VMAs as well as one or more meeting participants. Furthermore, and as discussed, the playback can include meta information associated with the meeting such as which agenda items were tagged, which VMAs were present, which attendees were present, and the like. Control then continues to step S530 where the control sequence ends.

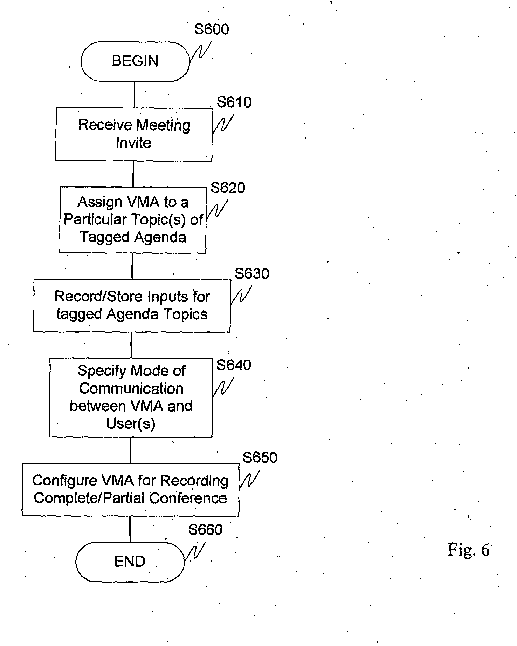

Fig. 6 outlines and exemplary method for assigning a VMA according to this invention. In particular, control begins in step S600 and continues to step S610. In step S610, a meeting invite is received by an attendee. Next, in step S620, the attendee can optionally assign a VMA to participate in certain topics of the agenda. Control then continues to step S630.

In step S630, the inputs for the tagged agenda items are recorded and stored. Next, in step S640, preferences for the attendee can be established, such as specifying the mode of communication between the VMA and the associated attendee, and the like. Then, in step S650, the VMA can also be configured for recording one or more portions of a conference, as well as configured to perform a dynamic behavior based on one or more triggering events. Control then continues to step S660 where the control sequence ends.

It will be appreciated from the preceding description, and for reasons of computational efficiency, that the components of the system can be arranged at any location within a distributed network of components without affecting the operation of the system. For example, the various components can be located in a switch such as a PBX and media server, gateway, a cable provider, enterprise system, in one or more communications devices, at one or more users' premises, or some combination thereof. Similarly, one or more functional portions of the system could be distributed between a communications device(s) and an associated computing device.

Furthermore, it should be appreciated that the various links, such as link 5, connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radiowave and infra-red data communications.

Also, while the flowcharts have been discussed and illustrated in relation to a particular sequence of events, it should be appreciated that changes, additions, and omissions to this sequence can occur without materially affecting the operation of the invention.

In yet another embodiment, the systems and methods of this invention can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention.

Exemplary hardware that can be used for the present invention includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as a program embedded on personal computer such as an applet, JAVAⓇ or CGI script, as a resource residing on a server or computer workstation, as a routine embedded in a dedicated measurement system, system component, or the like. The system can also be implemented by physically incorporating the system and/or method into a software and/or hardware system.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A method for enhancing a conference comprising:
designating (S284) a virtual meeting attendant, VMA, to act on behalf of a previously invited conference attendee;
said VMA performing the steps of:
recognizing a triggering event (S430) in the conference, wherein the triggering event in the conference comprises detection of the conference attendee's name spoken in the conference and detection of a question to the conference attendee spoken in the conference;
taking an action item on behalf of the conference attendee based on at least one of the triggering event in the conference, the VMA having access to information that allows patching on demand, based on the triggering event in the conference, via an initiation of an outbound communication, of the conference attendee into the conference to allow the conference attendee to contribute to the conference and interact with one or more other conference attendees attending the conference in real-time;
determining, based on preferences and presence information, how to contact the conference attendee; and
in response to detecting the triggering event in the conference, initiating a contact to the conference attendee, wherein initiating the contact to the conference attendee further comprises at least one of the following:
converting the question to text and sending the text over an Instant Message, IM, to the conference attendee; and
calling the conference attendee and playing the question to the conference attendee.

2. The method of claim 1, further comprising assigning a priority to each VMA, the priority being ranked (S344) in an order in which information is provided relative to other VMAs.

3. The method of claim 1, further comprising allowing the conference attendee to elect whether for one or more agenda items that:
the conference attendee will participate,
the conference attendee will not participate, or
the conference attendee's VMA will participate on their behalf.

4. The method of claim 3, further comprising monitoring the status of a conference invitation for attendee elections.

5. The method of claim 1, wherein tagged agenda items are associated with information from one or more VMAs.

6. The method of claim 1, further comprising providing an interface to a conference attendee adapted to receive one or more of preference information and conference information.

7. The method of claim 1, wherein VMA's are ranked based on one or more of title, order received, wherein an action item is based on the detection of a triggering event, and the action item includes one or more of recording, contacting a conference participant and information from the conference attendee is presented to the conference by the VMA in response to a query from the VMA to the conference attendee.

8. A computer-readable storage media having stored thereon instructions, that when executed by a computer, cause the steps of claim 1 to be performed.

9. A system comprising means for performing the steps of claim 1.

10. A system for enhancing a conference comprising:
a Virtual Meeting Attendant, VMA, designated to act on behalf of a previously invited conference attendee;
said VMA being adapted to recognize a triggering event in the conference, wherein the triggering event in the conference comprises detection of the conference attendee's name spoken in the conference and detection of a question to the conference attendee spoken in the conference, and, take an action item on behalf of the conference attendee based on the triggering event in the conference, wherein the VMA has access to information that allows patching on demand based on the triggering event in the conference, via an initiation of an outbound communication, of the conference attendee into the conference to allow the conference attendee to interact with one or more other conference attendees; and
wherein the VMA comprises: an agenda management module (160);
an on demand patching module (110) that determines, based on preferences and presence information, how to contact the conference attendee and initiates a contact to the conference attendee in response to detecting the triggering event in the conference, wherein initiating the contact to the conference attendee further comprises at least one of the following:
converting the question to text and sending the text over an Instant Message, IM, to the conference attendee; and
calling the conference attendee and playing the question to the conference attendee.

11. The system of claim 10, wherein a priority is assigned to each VMA, the priority being ranked in an order in which information is provided relative to other VMAs.

12. The system of claim 10, said VMA further comprising a conference status module (170) that allows conference attendee to elect whether for one or more agenda items the
the conference attendee will participate,
the conference attendee will not participate, or
the conference attendee's VMA will participate on its behalf, wherein the conference status module further monitors the status of a conference invitation for attendee elections.

13. The system of claim 10, said VMA further comprising:
an input module (140) that provides an interface to a conference attendee adapted to receive one or more of preference information and conference information.

## Patentansprüche

1. Verfahren zur Verbesserung einer Konferenz, umfassend:
Designieren (S284) eines virtuellen Versammlungsteilnehmers (Virtual Meeting Attendant), VMA, um im Namen eines vorher eingeladenen Konferenzteilnehmers zu handeln;
wobei der genannte VAM folgende Schritte ausführt:
Erkennen eines auslösenden Ereignisses (S430) in der Konferenz, wobei das auslösende Ereignis in der Konferenz die Detektion des in der Konferenz gesprochenen Namens des Konferenzteilnehmers und die Detektion einer in der Konferenz gesprochenen Frage des Konferenzteilnehmers umfasst;
Nehmen eines Aktionspostens im Namen des Konferenzteilnehmers, auf wenigstens einem der auslösenden Ereignisse basierend, in den VMA mit Zugriff auf Information, die Patching auf Anforderung, auf der Grundlage des auslösenden Ereignisses in der Konferenz, über eine Initiierung einer abgehenden Kommunikation, des Konferenzteilnehmers in die Konferenz zulässt, um dem Konferenzteilnehmer zu erlauben, zur Konferenz beizutragen und mit einem oder mehreren anderen Konferenzteilnehmern in Echtzeit zu interagieren, welche an der Konferenz teilnehmen;
Ermitteln, auf Vorzügen und Anwesenheitsinformation basierend, wie der Konferenzteilnehmer zu kontaktieren ist; und
als Reaktion auf das Detektieren des auslösenden Events in der Konferenz, Initiieren eines Kontakts zum Konferenzteilnehmer, wobei das Initiieren des Kontakts zum Konferenzteilnehmer ferner wenigstens eins des Folgenden umfasst:
Umwandeln der Frage in Text und Senden des Textes über eine Sofortnachricht bzw. Instant Message, IM, zum Konferenzteilnehmer; und
Rufen des Konferenzteilnehmers und Wiedergabe der Frage an den Konferenzteilnehmer.

2. Verfahren nach Anspruch, das ferner die Zuordnung einer Priorität für jeden VMA umfasst, wobei die Priorität in einer Reihenfolge rangiert ist (S344), in der Information relativ zu anderen VMAs bereitgestellt wird.

3. Verfahren nach Anspruch 1, das ferner umfasst, dem Konferenzteilnehmer zu gestatten ein oder mehrere Tagesordnungspunkte zu selektieren, an denen:
der Konferenzteilnehmer teilnehmen wird,
der Konferenzteilnehmen nicht teilnehmen wird, oder
der virtuelle Versammlungsteilnehmer bzw. VMA des Konferenzteilnehmers in ihrem Namen teilnehmen wird.

4. Verfahren nach Anspruch 3, das ferner das Überwachen des Status einer Konferenzeinladung für Teilnehmerwahlen umfasst.

5. Verfahren nach Anspruch 1, wobei markierte Tagesordnungspunkte mit Information von einem oder mehreren VMAs assoziiert sind.

6. Verfahren nach Anspruch 1, das ferner die Bereitstellung einer Schnittstelle zu einem Konferenzteilnehmer umfasst, die angepasst ist, ein oder mehrere von Vorzugsinformation und Konferenzinformation zu empfangen.

7. Verfahren nach Anspruch 1, wobei die VMAs auf der Grundlage eines oder mehr von Titel, empfangener Reihenfolge rangiert sind, wobei ein Aktionsposten auf der Detektion eines auslösenden Ereignisses basiert, und der Aktionsposten eins oder mehrere des Folgenden einschließt, nämlich Aufnahme, Kontaktieren eines Konferenzteilnehmers und Information seitens des Konferenzteilnehmers wird der Konferenz vom VMA als Reaktion auf eine Anfrage seitens des VMA an den Konferenzteilnehmer präsentiert.

8. Computerlesbare Speichermedien mit darauf gespeicherten Befehlen, die, wenn von einem Computer ausgeführt, die Ausführung der Schritte des Anspruchs 1 bewirken.

9. System, das Mittel zum Ausführen der Schritte des Anspruchs 1 umfasst.

10. System zur Verbesserung einer Konferenz, umfassend:
Einen virtuellen Versammlungsteilnehmer bzw. "Virtual Meeting Attendant", VMA, der designiert ist, im Namen eines vorher eingeladenen Konferenzteilnehmers zu agieren;
wobei der genannte VAM angepasst ist, ein auslösendes Ereignis in der Konferenz zu erkennen, wobei das auslösende Ereignis in der Konferenz die Detektion des in der Konferenz gesprochenen Namens des Konferenzteilnehmers umfasst, und, Nehmen eines Aktionspostens im Namen des Konferenzteilnehmers auf der Grundlage des auslösenden Ereignisses in die Konferenz, wobei der VMA Zugriff auf Information hat, die Patching auf Anforderung auf der Grundlage des auslösenden Ereignisses in der Konferenz gestattet, über eine Initiierung einer abgehenden Kommunikation, des Konferenzteilnehmers in die Konferenz, um dem Konferenzteilnehmer zu gestatten, mit einem oder mehreren anderen Konferenzteilnehmern zu interagieren; und
wobei der VMA umfasst:
Ein Tagesordnungs-Managementmodul (160);
ein Modul (110) für Patching auf Anforderung, das, auf der Grundlage von Vorzügen und Anwesenheitsinformation, bestimmt, wie der Konferenzteilnehmer zu kontaktieren ist und initiiert einen Kontakt zum Konferenzteilnehmer, als Reaktion auf das Detektieren des auslösenden Ereignisses in der Konferenz, wobei das Initiieren des Kontakts zum Konferenzteilnehmer ferner wenigstens eins des Folgenden umfasst:
Umwandeln der Frage in Text und Senden des Textes über eine Sofortnachricht bzw. Instant Message, IM, zum Konferenzteilnehmer; und
Rufen des Konferenzteilnehmers und Wiedergabe der Frage an den Konferenzteilnehmer.

11. System nach Anspruch 10, wobei jedem VMA eine Priorität zugeordnet wird, wobei die Priorität in einer Reihenfolge rangiert ist, in der Information relativ zu anderen VMAs bereitgestellt wird.

12. System nach Anspruch 10, wobei der genannte VMA ferner ein Konferenzstatusmodul (170) umfasst, das dem Konferenzteilnehmer gestattet, zu wählen ob für einen oder mehrere Tagesordnungspunkte:
der Konferenzteilnehmer teilnehmen wird,
der Konferenzteilnehmer nicht teilnehmen wird, oder
der VMA des Konferenzteilnehmers in seinem Namen teilnehmen wird,
wobei das Konferenzstatusmodul ferner des Status einer Konferenzeinladung für Teilnehmerwahlen überwacht.

13. System nach Anspruch 10, wobei der genannte VMA ferner umfasst:
Ein Eingabemodul (140), das eine Schnittstelle zu einem Konferenzteilnehmer bereitstellt, das angepasst ist, eine oder mehrere von Vorzugsinformation und Konferenzinformation zu empfangen.

## Revendications

1. Procédé servant à améliorer une conférence qui consiste entre autres:
à désigner (S284) un participant à des réunions virtuel (PRV) qui agira au nom d'un participant déjà invité à la conférence; ce PRV procédant aux étapes qui consistent:
à reconnaître un événement déclencheur (S430) au cours de la conférence, **caractérisé en ce que** l'événement déclencheur de la conférence consiste à détecter le nom du participant prononcé au cours de la conférence et aussi à détecter une question adressée au participant qui est prononcée au cours de la conférence;
à prendre une mesure au nom du participant à la conférence qui sera fonction d'au moins l'un des événements déclencheurs de la conférence, le PRV ayant accès à l'information qui permet la connexion à la demande, ceci sur la base de l'événement déclencheur de la conférence, par voie du lancement d'une communication de départ avec le participant à la conférence, ce qui permet à celui-ci de contribuer à la conférence et d'interagir avec un ou plusieurs autres participants qui se trouvent présents en temps réel;
à déterminer, en fonction des préférences et des détails sur la présence, comment prendre contact avec le participant à la conférence; et
suite à la détection de l'événement déclencheur de la conférence, à établir le contact avec le participant à la conférence, **caractérisé en ce que** l'établissement du contact avec le participant à la conférence consiste par ailleurs à prendre au moins l'une des mesures suivantes:
convertir la question posée en texte puis transmettre le texte, sous forme de message immédiat, MI, au participant à la conférence; et
appeler le participant à la conférence afin de lui reproduire la question.

2. Procédé selon la revendication 1, qui consiste par ailleurs à assigner une priorité à chaque PRV, la priorité étant classée (S344) en fonction de l'ordre dans lequel les informations sont fournies par rapport aux autres PRV.

3. Procédé selon la revendication 1, qui consiste par ailleurs à permettre au participant à la conférence de choisir un ou plusieurs points à l'ordre du jour:
auxquels le participant à la conférence va prendre part,
auxquels le participant à la conférence ne va pas prendre part, ou bien auxquels le PRV du participant à la conférence va prendre part en son nom.

4. Procédé selon la revendication 3, qui consiste par ailleurs à surveiller le statut de l'invitation faite par la conférence de procéder aux élections parmi les participants.

5. Procédé selon la revendication 1, **caractérisé en ce que** les points à l'ordre du jour marqués correspondent aux informations fournies par un ou plusieurs PRV.

6. Procédé selon la revendication 1, qui consiste par ailleurs à prévoir une interface avec un participant à la conférence qui sera adaptée de manière à recevoir un ou plusieurs éléments d'information préférentiels et éléments d'information sur la conférence.

7. Procédé selon la revendication 1, **caractérisé en ce que** les PRV sont classés selon un ou plusieurs des éléments suivants: titre, ordre reçu, **caractérisé en ce qu'**une mesure prise est fonction de la détection d'un événement déclencheur, et **en ce que** cette mesure prise comporte un ou plusieurs des éléments suivants: enregistrement, prise de contact avec un participant à la conférence, et information émanant du participant à la conférence et présentée à la conférence par le PRV suite à une demande d'information faite par le PRV et adressée au participant à la conférence.

8. Support de stockage exploitable sur ordinateur comprenant des instructions rangées en mémoire qui, lors de leur exécution par l'ordinateur, lancent le déroulement des étapes de la revendication 1.

9. Système comprenant des moyens de faire dérouler les étapes indiquées dans la revendication 1.

10. Système servant à améliorer une conférence, qui comporte:
un participant à des réunions virtuel (PRV) désigné pour agir au nom d'un participant déjà invité à la conférence;
ce PRV étant adapté de manière à reconnaître un événement déclencheur au cours de la conférence, **caractérisé en ce que** l'événement déclencheur de la conférence consiste à détecter le nom du participant prononcé au cours de la conférence et aussi à détecter une question adressée au participant qui est prononcée au cours de la conférence, à prendre une mesure au nom du participant à la conférence qui sera fonction de l'événement déclencheur de la conférence, **caractérisé en ce que** le PRV a accès à l'information qui permet la connexion à la demande, ceci sur la base de l'événement déclencheur de la conférence, par voie du lancement d'une communication de départ avec le participant à la conférence, ce qui permet à celui-ci de contribuer à la conférence et d'interagir avec un ou plusieurs autres participants à la conférence; et **caractérisé en ce que** le PRV comporte:
un module de gestion de l'ordre du jour (160);
un module de connexion à la demande (110) qui détermine, en fonction des préférences et des détails sur la présence, comment prendre contact avec le participant à la conférence, et établit le contact avec le participant à la conférence suite à la détection de l'événement déclencheur de la conférence, **caractérisé en ce que** l'établissement du contact avec le participant à la conférence consiste par ailleurs à prendre au moins l'une des mesures suivantes:
convertir la question posée en texte puis transmettre le texte, sous forme de message immédiat, MI, au participant à la conférence; et
appeler le participant à la conférence afin de lui reproduire la question.

11. Système selon la revendication 10, **caractérisé en ce qu'**une priorité est assignée à chaque PRV, la priorité étant classée en fonction de l'ordre dans lequel les informations sont fournies par rapport aux autres PRV.

12. Système selon la revendication 10, le PRV comportant par ailleurs un module (170) indiquant le statut de la conférence qui permet au participant à la conférence de choisir un ou plusieurs points à l'ordre du jour:
auxquels le participant à la conférence va prendre part,
auxquels le participant à la conférence ne va pas prendre part, ou bien
auxquels le PRV du participant à la conférence va prendre part en son nom, **caractérisé en ce que** le module de statut de la conférence est appelé à surveiller le statut de l'invitation faite par la conférence de procéder aux élections parmi les participants.

13. Système selon la revendication 10, le PRV comportant par ailleurs:
un module d'entrée (140) qui sert d'interface avec un participant à la conférence, et qui est adapté de manière à recevoir un ou plusieurs éléments d'information préférentiels et éléments d'information sur la conférence.
